Europäisches Patentamt

European Patent Office

Office européen des brevets

(19)

(11) Veröffentlichungsnummer: **0 183 961**

**A2**

(12)

# EUROPÄISCHE PATENTANMELDUNG

(21) Anmeldenummer: 85113433.8

(22) Anmeldetag: 23.10.85

(51) Int. Cl.⁴: **F 23 G 5/20**
F 23 L 15/04, F 23 G 5/46
F 23 J 15/00, F 23 J 1/08
F 23 L 7/00, F 23 J 3/04
B 01 D 53/34

(30) Priorität: 03.12.84 DE 3444073

(43) Veröffentlichungstag der Anmeldung:
11.06.86 Patentblatt 86/24

(84) Benannte Vertragsstaaten:
AT BE CH DE FR GB IT LI LU NL

(71) Anmelder: Klöckner-Humboldt-Deutz
Aktiengesellschaft
Deutz-Mülheimer-Strasse 111 Postfach 80 05 09
D-5000 Köln 80(DE)

(71) Anmelder: Dyckerhoff Engineering GmbH
Biebricher Strasse 72
D-6200 Wiesbaden 1(DE)

(72) Erfinder: Wolter, Albrecht, Dr.
Bismarckstrasse 40
D-5000 Köln 1(DE)

(72) Erfinder: Hartmann, Rolf
Irisweg 29
D-5000 Köln 90(DE)

(72) Erfinder: Herchenbach, Horst
Sonnenweg 6
D-5202 Hennef 1(DE)

(72) Erfinder: Grisar, Alexander
Am Eiskeller 21
D-6500 Mainz-Finthen(DE)

(74) Vertreter: Beisner, Klaus, Dipl.-Ing. et al,
c/o KHD Humboldt Wedag AG Patente und Lizenzen
Wiersbergstrasse Postfach 91 04 57
D-5000 Köln 91(DE)

(54) **Verfahren und Anlage zum Verbrennen von Abfällen wie Haus-, Industrie- oder Sondermüll.**

(57) Bei einem Verfahren und einer Anlage zum Verbrennen von Abfällen wie Kommunal- und anderem Müll kommt es darauf an, die Emission toxischer, organischer Verbindungen im Rauchgas und die Bildung umweltschädlicher Verbrennungsrückstände zu vermeiden. Die Erfindung sieht eine Verbrennung im Drehrohrofen bei Temperaturen oberhalb 1200 °C unter Verwendung von Brennluft im Temperaturbereich zwischen 300 und 800 °C bei geringem Luftüberschuß und verringerter Rauchgasmenge vor.

Die Erfindung schlägt weiter vor, die Wärmeübertragung vom heißen Rauchgas auf die Brennluft mit Hilfe eines Wärmeübertagungsfeststoffs vorzunehmen, wobei der Feststoff im Kontakt mit Rauchgas aufgeheizt und anschließend im Kontakt mit Luft gekühlt und diese Luft auf Brennlufttemperatur aufgeheizt und der Feuerung des Drehrofens zugeleitet wird. Der Feststoff bindet zugleich Schadstoffe im Rauchgas.

./...

FIG. 2

Anlage zum Patentgesuch der     - 1 -     DYCKERHOFF
Dyckerhoff Engineering GmbH               und
und der                                 K H D
Klöckner-Humboldt-Deutz           H 84/51
Aktiengesellschaft
vom 23. November 1984

Verfahren und Anlage zum Verbrennen von Abfällen
wie Haus-, Industrie- oder Sondermüll

---

Beschreibung

Die Erfindung betrifft ein Verfahren sowie eine Anlage
zum Verbrennen von Abfällen wie Hausmüll und
hausmüllähnlichen Abfällen und/oder Industrie- sowie
Sondermüllabfällen in einem Drehrohrofen unter Zufuhr
vorgewärmter Brennluft.

Die wirtschaftliche Beseitigung von Abfallstoffen, wie
insbesondere Müll der eingangs genannten Arten, stellt
ein schwieriges Problem dar. Dies gilt insbesondere,
wenn solche Abfallstoffe in üblichen
Müllverbrennungsanlagen beseitigt werden. Diese sind

**0183961**
DYCKERHOFF
und
K H D
H 84/51

vorwiegend mit Rostfeuerungen ausgestattet, welche mit großen Luftüberschüssen betrieben werden müssen, um eine annähernd vollständige Verbrennung zu gewährleisten. Beispielsweise sind bei solchen Rostfeuerungen Luftüberschußzahlen von 1,8 bis 2,2 üblich. Hierdurch ergeben sich erhebliche Nachteile, unter anderem dadurch, daß derart betriebene Feuerungen große Mengen an Rauchgas mit relativ geringer Temperatur, beispielsweise zwischen 800 und 900 °C erzeugen. Der Wirkungsgrad einer in den Rauchgasstrom eingeschalteten Einrichtung zur Energiegewinnung, beispielsweise zur Dampf- oder Stromerzeugung, ist infolgedessen relativ gering. Ferner bedingen große Mengen an Rauchgas große und somit kostenintensive Abgasreinigungsanlagen.

Als Folge von Inhomogenität sowie unterschiedlicher Heizwerte der Abfälle und der Schwierigkeit, diese im Rostofen zu durchwirbeln, um sie mit Brennluft in Kontakt zu bringen, ergeben sich Zonen im Ofen, in denen die geforderte Verbrennungstemperatur von 800 °C nicht erreicht wird und/oder Sauerstoffmangel herrscht. Diese Situation ist besonders in solchen Perioden kritisch, bei welchen relativ feuchter, beziehungsweise heizwertarmer Abfall zum Einsatz kommt. Somit entstehen unkontrollierbare Bereiche im Ofen, bei denen eine Verbrennung bei Temperaturen unterhalb etwa 800 °C stattfindet. In diesen Temperaturbereichen können sich jedoch beim Verbrennungsvorgang in Anwesenheit von Chlor und aromatischen Grundkörpern (z.B. aus chlorhaltigen Kunststoffen, Ligninsulfonsäuren, Pentachlorphenol, polychlorierten Biphenylen, etc.) die

0183961

DYCKERHOFF
und
K H D
H 84/51

im Abfall vorliegen, polychlorierte Dibenzodioxine und Dibenzofurane, insbesondere TCDD und TCDF bilden. Insbesondere die Dioxine sind auch bei Temperaturen von 1000 °C noch sehr stabil, so daß sie in einer Rostverbrennungsanlage nicht zerfallen. So wurden bereits Dioxingehalte in der Flugasche und im Reingasstaub verschiedener Müllverbrennungsanlagen nachgewiesen ("Die Zeit", 02.03.1984 "Dioxin, der Rächer aus der Retorte").

Die extreme Giftigkeit der Dioxine ist bekannt ("Bild der Wissenschaft", Nov. 1984, S. 64 - 76). Die konventionelle Müllverbrennung in Rostöfen ist somit allgemein in Frage gestellt (Chemical Engineering, June 6, 1983, S. 20 bis 64).

Theoretisch könnte man Dioxine, die bei der Verbrennung entstehen, wieder zum Zerfall bringen, indem der Rostfeuerung eine Nachverbrennungsstufe mit einer Feuerungstemperatur von mindestens 1200 °C nachgeschaltet wird. Das würde jedoch erhöhte Investitionen sowie den Einsatz konventioneller Brennstoffe erfordern und wäre folglich mit einem unwirtschaftlich hohen Aufwand an Kosten verbunden.

Eine andere Möglichkeit, nämlich die Verbrennung durch Verwendung hochtemperierter Verbrennungsluft bei höheren Feuerungstemperaturen durchzuführen, scheitert deshalb, weil die Brennluft bei Rostfeuerungen zu 70 bis 80 % als Primärluft unter dem Rost zugeführt wird und zugleich zur Kühlung der Rostplatten dient, weshalb eine Erwärmung nur sehr begrenzt möglich ist.

Auch eine Erhitzung der Sekundärluft würde eine nur relativ geringe Temperatursteigerung der Rauchgase verursachen, zumal die Verbrennungstemperaturen unterhalb des Sekundärlufteintritts hierdurch nicht gesteigert werden würden.

Und schließlich ist eine wesentliche Steigerung der Verbrennungstemperatur im Rostofen schon deshalb nicht möglich, weil dadurch die Schlacke zum Schmelzen käme und sich somit die Rostplatten zusetzen würden.

Bedingt durch die relativ geringen Brenntemperaturen im Rostofen wird nur ein geringer Teil der Schwermetalle beziehungsweise der Schwermetallverbindungen des Abfalls verflüchtigt. Der Rest wird mit der Schlacke ausgetragen, was die Verwertung dieser Schlacken für Straßenbau und ähnliche Anwendungsgebiete in Frage stellt.

Die Verbrennung von Hausmüll im Drehrohrofen kommt zur Zeit nur in geringem Umfange zur Anwendung. Ihr werden folgende Nachteile nachgesagt:

- Der Drehrohrofen selbst ist kostenaufwendiger als der Rostofen.

- Mit steigendem Drehrohrofendurchmesser vermindert sich die Schürwirkung (Umwälzung des Verbrennungsgutes, um den Sauerstoffkontakt zu gewährleisten), so daß für Hausmüll bis heute nur relativ kleine Einheiten (bis etwa 4m Durchmesser) zum Einsatz gekommen sind.

- Die einwandfreie Zündung des Mülls kann, insbesondere bei relativ feuchtem und heizwertarmem Abfall, nicht immer gewährleistet werden, so daß eine Unterstützung durch Zünderbrenner, die kostenaufwendig ist, erforderlich wird.

- Insbesondere bei schwankender Müllzusammensetzung ergibt sich die Schwerigkeit, den Ablauf beziehungsweise die Folge der verschiedenen Prozeßstufen (Trocknung, Schwelung, Zündung, Verbrennung) in definierten Bereichen des Ofens zu gewährleisten. Eine Verschiebung dieser Prozeßstufen, entlang der Drehrohrofenachse, auf die nicht unabhängig voneinander Einfluß genommen werden kann, wird als nachteilige Folge angesehen.

Der Erfindung liegt die Aufgabe zugrunde, ein Verfahren und eine Anlage zum Verbrennen von Abfällen wie Müll der eingangs genannten Arten in einem Drehrohrofen so zu verbessern, daß beim Verbrennungsprozeß Temperaturen von wenigstens 1200 °C bei geringem Luftüberschuß erreicht werden und dabei organische Verbindungen, insbesondere Dioxine, restlos abgebaut werden. Darüberhinaus sollen wirtschaftlich günstige Voraussetzungen für eine möglichst vollkommene Abgasreinigung von gas- und staubförmigen Schadstoffen und für die Erzeugung einer laugungsresistenten und damit deponierunschädlichen Schlacke geschaffen werden.

Die Lösung der Aufgabe gelingt bei einem Verfahren zum Verbrennen von Abfällen wie Hausmüll und

0183961

DYCKERHOFF
und
K H D
H 84/51

hausmüllähnlichen Abfällen und/oder Industrie- sowie Sondermüllabfällen in einem Drehrohrofen unter Zufuhr vorgewärmter Brennluft mit der Erfindung dadurch, daß die Brennluft auf Temperaturen im Bereich zwischen 300 und 800 °C aufgeheizt wird.

Mit Vorteil wird durch Aufheizen der Brennluft auf Temperaturen in diesem Bereich eine Verbrennung von Müll mit so hohen Temperaturen erreicht, daß die Bildung von Dioxinen vermieden wird beziehungsweise ein restloser Zerfall bereits vorhandener Dioxine erfolgt.

Eine Ausgestaltung des Verfahrens sieht vor, daß die Brennluft vorzugsweise auf einen Temperaturbereich zwischen 500 und 700 °C aufgeheizt wird.

Dabei wird erfindungsgemäß vorgeschlagen, daß zur Aufheizung der Brennluft Wärme von dem bei der Abfallverbrennung entstehenden Rauchgas auf die Brennluft übertragen wird.

Die Erwärmung der Verbrennungsluft auf ein relativ hohes Temperaturniveau beispielsweise zwischen 500 und 700 °C ergibt außer hohen Verbrennungstemperaturen noch folgende weitere Vorteile:

- Die erwärmte Luft wirkt als Wärmeenergieträger in der Weise, daß bei Einführung dieser Luft in den Ofen eine Trocknung und Verschwelung der Abfällen eingeleitet und damit Schwierigkeiten bei deren Zündung, insbesondere bei relativ feuchtem Müll, wirkungsvoll begegnet wird.

0183961

DYCKERHOFF
und
K H D
H 84/51

- Für das durch die heiße Brennluft vorgetrocknete Gut ergeben sich bessere Verbrennungsbedingungen. Es hat auch eine bessere Schürwirkung. Die Feuerung kann mit relativ geringen Luftüberschußmengen betrieben werden. In der Folge ergeben sich hierdurch, verglichen mit konventionellen Rostfeuerungen, geringere Rauchgasmengen. Diese benötigen eine entsprechend kleiner dimensionierte Rauchgasreinigungsanlage, wodurch mit Vorteil die Investitions- und Betriebskosten der Rauchgasreinigung, die einen wesentlichen Teil der Kosten einer Abfallverbrennung ausmachen, entsprechend reduziert werden.

- Die geringere Luftüberschußmenge bewirkt ferner, daß eine entsprechend geringere Menge an Kaltluft auf Brennlufttemperatur aufgeheizt werden muß. Damit wird eine Erhöhung der Rauchgastemperatur bei gleicher zur Verfügung stehender Wärmeübertragungsmenge beim erfindungsgemäßen Verfahren im Vergleich zu bekannten Verfahren erreicht. Weiter ergibt die geringere Luftüberschußmenge bei gleicher Wärmeentwicklung der Feuerung eine geringere Rauchgasmenge mit höherer Temperatur und somit einem entsprechend besseren Wirkungsgrad bei einer der Abfallverbrennung nachgeschalteten Einrichtung zur wirtschaftlichen Nutzung von Wärmeenergie.

Eine Ausgestaltung des Verfahrens sieht vor, daß die Brennluft auf eine so hohe Temperatur aufgeheizt wird, daß die Rauchgase der Abfallverbrennung Temperaturen von mindestens 1200 °C erreichen, wobei Verbrennungsrückstände vorzugsweise geschmolzen werden.

Mit Vorteil werden bei diesen Verbrennungstemperaturen sämtliche organische Verbindungen und insbesondere Dioxine zerstört. Weiter ergibt sich durch das Schmelzen der Asche eine Vergleichmäßigung derselben. Durch anschließende Kühlung der flüssigen Schlacke im Wasserbad entsteht ein Schlackengranulat, welches unter anderem latenthydraulische Eigenschaften aufweisen kann. Somit ergibt sich für diese Schlacke die Möglichkeit einer wirtschaftlichen Verwertung beispielsweise für die Herstellung eines hydraulischen Bindemittels durch Vermahlung mit Portland-Zementklinker.

Weiterhin werden infolge der erfindungsgemäß erreichten hohen Verbrennungstemperaturen Schwermetalle und deren Verbindungen weitgehend verflüchtigt. Somit entsteht, im Vergleich zu bekannten Abfallverbrennungsanlagen, primär eine wesentlich schadstoffärmere, fallweise schadstofffreie und gleichmäßigere Schlacke. Entsprechend erhöht sich der Gehalt an Schwermetallen beziehungsweise deren Verbindungen im Abgas. Dieses muß jedoch ohnehin gereinigt werden. Hierbei sind trockene oder nasse Rauchgaswaschanlagen und Entstaubungseinrichtungen in jedem Falle erforderlich und vom Gesetzgeber vorgeschrieben. Die hierbei anfallenden Reststäube beziehungsweise Flugaschen müssen ohnehin gesondert deponiert werden. Es handelt sich dabei jedoch um relativ geringe Mengen. Verglichen

0183961
DYCKERHOFF
und
K H D
H 84/51

damit ist der Schlackenanfall wesentlich größer, woraus sich mit dem erfindungsgemäßen Verfahren Vorteile dadurch ergeben, daß primär eine weitgehend schadstofffreie Schlacke anfällt, die entweder einer stofflichen Nutzung zugeführt oder schadlos deponiert werden kann.

Weiter sieht das Verfahren nach der Erfindung vor, daß die Brennluft in einem indirekten Wärmeaustauschprozeß mit wenigstens einem Teil der Rauchgase erhitzt wird.

Wie bereits erwähnt, ist die Höhe der Brennlufttemperatur nicht nur direkt von Vorteil für den Verbrennungsvorgang, sondern auch indirekt für dessen Vorstufen wie Abfalltrocknung, Schwelung und Auflockerung durch Schürwirkung.

Mit Vorteil sieht eine erfindungswesentliche Ausgestaltung des Verfahrens weiter vor, daß der Wärmeaustausch vom Rauchgas auf die Brennluft mit Hilfe eines Wärmeübertragungsmediums vorgenommen, und daß als Wärmeübertragungsmedium ein Feststoff verwendet wird.

Infolge der Verwendung eines Wärmeübertragungsfeststoffes gelingt es problemlos, eine erforderliche Wärmemenge vom hochtemperierten Rauchgas mittels indirektem Wärmeaustausch auf die Brennluft zu übertragen, und diese dabei auf das vorgesehene Temperaturniveau zwischen 300 und 800 °C, vorzugsweise zwischen 500 und 700 °C, zu erwärmen.

Dabei sieht eine Ausgestaltung zur vorteilhaften praktischen Durchführung des Verfahrens vor, daß der Wärmeübertragungsfeststoff in einer Aufheizstufe im Kontakt mit dem Rauchgasstrom aufgeheizt, danach in eine Kühlstufe überführt und darin im Kontakt mit Luft gekühlt und dabei die Luft zur Brennlufttemperatur aufgeheizt wird.

Somit wird durch Wärmeübertragung im Kontakt von Rauchgas/Wärmeübertragungsfeststoff einerseits und von Wärmeübertragungsfeststoff/Luft andererseits jeweils ein hoher Wirkungsgrad erzielt, ohne daß die Luft unmittelbar mit dem Rauchgas in Berührung kommt. Der Wärmeübertragungsmechanismus nach der Erfindung arbeitet infolgedessen mit indirekter Wärmeübertragung vom Rauchgas auf die Brennluft.

Um eine möglichst wirtschaftliche Nutzung des Wärmeinhalts des Rauchgases zu erreichen, sieht eine weitere Ausgestaltung mit Vorteil vor, daß Wärme des Rauchgases, in Strömungsrichtung gesehen, zunächst teilweise auf den Wärmeübertragungsfeststoff übertragen, danach zur Erzeugung von Nutzenergie herangezogen und schließlich nochmals zur Wärmeübertragung auf den Wärmeübertragungsfeststoff für dessen Vorwärmung verwendet wird.

Der Vorteil dieser stufenweisen Wärmeübertragung liegt insbesondere darin, daß bei jeder dieser Stufen ein für den vorgesehenen Zweck vorteilhaftes Intervall der Rauchgastemperatur genutzt wird, wobei beispielsweise zur Erzeugung von Nutzenergie Rauchgas mit einem noch relativ hohen Temperaturniveau zur Verfügung steht, und die Abwärme aus der Erzeugung von Nutzenergie zur Vorwärmung des Feststoffes verwendet wird, während der heißeste Wärmebereich des Rauchgases für eine möglichst hochgradige Erhitzung des Feststoffes zur Verfügung steht.

Dabei sieht eine weitere Ausgestaltung vor, daß nicht für die Erwärmung des Wärmeübertragungsfeststoffes genutzte Wärmeenergie des Rauchgases anderweitig wärmewirtschaftlich, zum Beispiel zur Mülltrocknung beziehungsweise für Dampf-, Fernwärme- und/oder Stromerzeugung etc. verwendet wird.

Eine erfindungswesentliche Ausgestaltung sieht weiter vor, daß als Wärmeübertragungsfeststoff mindestens zum Teil feinkörniger mineralischer Feststoff verwendet wird, dessen Komponenten, wie beispielsweise Kalk oder Kalkstein, Aktivitäten zur chemischen oder adsorptiven Bindung von bei der Müllverbrennung freigesetzten Schadstoffen besitzen.

Hierbei erweist es sich als besonder vorteilhaft, Kalksteinmehl beziehungsweise ein kalksteinhaltiges Produkt wie beispielsweise Zementrohmehl als Wärmeübertragungsfeststoff einzusetzen. Kalksteinmehl kann kostengünstig hergestellt und erworben werden und wird, bedingt durch die hohen Temperaturen beim Wärmeaustausch, zu hochreaktivem Kalk entsäuert. Dieser besitzt einen außerordentlich hohen Schmelzpunkt, so daß bei der Wärmeübertragung Schmelzphasenbildungen bei dem im Kreislauf geführten Wärmeübertragungsfeststoff mit Sicherheit vermieden werden.

0183961
DYCKERHOFF
und
K H D
H 84/51

Damit ergibt sich durch die Verwendung des vorgesehenen Wärmeübertragungsfeststoffes nicht nur eine vorteilhafte und problemlose Möglichkeit der Übertragung von Wärmeenergie des Rauchgases auf die Brennluft, sondern darüberhinaus ein intensiver Reinigungs- beziehungsweise Neutralisationseffekt des Rauchgases, wobei Schadstoffe in bekannter Weise vom Feststoff chemisch oder adsorptiv gebunden werden. Entsprechend kann auf eine in konventionellen Abfallverbrennungsanlagen übliche, separate Rauchgaswäsche mit großem Kostenvorteil verzichtet werden.

Die Erfindung sieht weiter vorteilhaft die Möglichkeit vor, daß als Wärmeübertragungsfeststoff mindestens zu einem Teil beim Müllverbrennungsprozeß gewonnene, vorzugsweise granulierte Schlacke verwendet wird.

Sowohl für den Wirkungsgrad der Wärmeübertragung als auch für den Wirkungsgrad bei der Reinigung und Neutralisation des Rauchgases wird mit Vorteil der Wärmeübertragungsfeststoff in feinkörniger Form, vorzugsweise in Form von Feststoffmehl, zur Wärmeübertragung verwendet.

Eine weitere erfindungswesentliche Ausgestaltung der Erfindung sieht vor, daß die Menge des Aufheiz- und Kühlstufen durchlaufenden Wärmeübertragungsfeststoffes wenigstens zum überwiegenden Teil mehrfach im Kreislauf durch das Wärmeübertragungssystem geführt wird.

Hierdurch wird einerseits eine wärmewirtschaftlich günstige Vorwärmung des nach Erhitzung der Brennluft noch Wärme enthaltenden Feststoffes erreicht. Ferner findet eine Reinigung beziehungsweise Neutralisation des Rauchgases in unterschiedlich hohen Temperaturbereichen statt. Dabei werden in einem relativ niedrigen Temperaturbereich unter anderem flüchtige Schwermetalle und/oder deren Verbindungen, die in relativ hohen Temperaturbereichen nicht an den Feststoff gebunden werden können, durch chemische und/oder adsorptive Bindung vom Wärmeübertragungsfeststoff aufgenommen.

Um hierbei die Anreicherung des Feststoffes mit Schadstoffen im Kreislauf innerhalb vorgesehener Grenzen halten zu können, ist weiter vorgesehen, daß dem Feststoff nach Maßgabe seiner Anreicherung an Schadstoffen frischer Feststoff zugeführt und verbrauchter Feststoff abgeführt wird. Hierfür ist vorgesehen, daß das Maß der Schadstoffanreicherung des Feststoffes an wenigstens einer Stelle des Kreislaufes ermittelt und als Regelgröße für die Feststoff-Abführmenge und/oder für die Zuführmenge verwendet wird.

Dabei kann, bedingt durch die relativ großen Feststoffmengen, die für den Wärmeaustausch erforderlich sind, sowie bedingt dadurch, daß der Wärmeübertragungsfeststoff im Kreislauf wiederholt mit den Schadstoffen in Kontakt gebracht wird, eine vergleichsweise ungewöhnlich hohe Schadstoffbindung insbesondere durch kalkhaltigen Feststoff erreicht werden. Entsprechend gering sind im Verhältnis zur Menge des Rauchgases die vom Kreislauf abzuführenden Feststoffmengen beziehungsweise der Verbrauch an frischem Feststoff. Im Vergleich zu trockenen Rauchgaswäschen, die üblicherweise in Müllverbrennungsanlagen eingesetzt werden, kommt daher das Verfahren nach der Erfindung mit wesentlich geringerem Einsatz von Absorptionsmitteln aus. Entsprechend müssen geringere Feststoffmengen, deren Entsorgung hohe Kosten verursacht, abgeführt werden und entlasten die laufenden Betriebskosten.

Kurzfristige Erhöhungen des Schadstoffgehaltes in den Rauchgasen können darüberhinaus, bedingt durch die großen, im Kreislauf befindlichen Feststoffmengen aufgefangen werden, ohne daß, wie sonst üblich, die Bemessung der Rauchgasentsorgungseinrichtung nach Maßgabe der maximalen Schadstoffkonzentration im Rauchgas erforderlich ist.

Zur Aufrechterhaltung eines ausgewogenen Kreislaufs ist mit Vorteil weiter vorgesehen, daß der Mengenstrom des im Kreislauf geführten Feststoffes vorzugsweise im abgekühlten Zustand gravimetrisch oder volumetrisch erfaßt und ein entsprechender Wert als Regelgröße für die dem Kreislauf zugegebene Feststoffmenge verwendet wird.

Dabei ist weiter vorgesehen, daß zur Aufrechterhaltung eines Konzentrationsgefälles bei der Reinigungs- beziehungsweise Neutralisationsaktivität des Feststoffes Teilmengen nach Maßgabe ihrer Anreicherung an Schadstoffen jeweils an unterschiedlichen Stellen des Feststoff-Kreislaufs, beispielsweise an Stellen unterschiedlichen Temperaturniveaus beziehungsweise hoher spezifischer Anreicherungen, abgezogen werden. Hierdurch wird vermieden, daß beispielsweise in einem relativ niedrigen Temperaturniveau an den Feststoff gebundene Schwermetalle oder deren Verbindungen an Stellen hohen Temperaturniveaus wieder vollständig verdampft werden.

Eine Ausgestaltung sieht vor, daß Wärmeübertragungsfeststoff in der Aufheizstufe dem Rauchgasstrom und fallweise zum Teil auch dem Drehrohrofen aufgegeben wird.

Um einer schädlichen Bildung von Stickoxiden bei hohen Verbrennungstemperaturen vorzubeugen beziehungsweise diese abzubauen, ist mit einer Ausgestaltung weiter vorgesehen, daß bei der Wärmeübertragung vom Rauchgas auf den Wärmeübertragungsfeststoff durch Zugabe von Brennstoff eine reduzierende Atmosphäre eingestellt wird, und daß nach vollzogenem Wärmeaustausch im Abgas enthaltener Brennstoff durch Zugabe von Brennluft nachverbrannt wird, wofür gegebenenfalls aufgeheizte Luft verwendet wird.

Ferner ist mit einer vorteilhaften Ausgestaltung des Verfahrens vorgesehen, daß die Müllverbrennung mit einem Brenngas durchgeführt wird, welches gegenüber Brennluft einen erhöhten Sauerstoffgehalt aufweist, beziehungsweise daß zusätzlich zur vorgeheizten Brennluft Sauerstoffgas in die Feuerung des Drehrohrofens eingeleitet wird.

Insbesondere bei Einsatz von relativ feuchtem und heizwertarmem Abfall kann die Zuspeisung von Sauerstoffgas in die Feuerung des Drehrohrofens eine wesentliche Intensivierung der Verbrennung bewirken, welche zudem eine Verringerung des auf hohem Temperaturniveau anfallenden Rauchgases zur Folge hat, wie dies mit der Erfindung angestrebt wird.

Und schließlich sieht das Verfahren nach der Erfindung vor, daß das Rauchgas vor Abgabe von Wärme außerhalb des Drehrohrofens durch einen Reaktionsraum geführt und darin Temperatur und Verweilzeit des Rauchgases eingestellt wird.

Weil der restlose Abbau organischer chemischer Verbindungen und insbesondere der verschiedenen Dioxine eine Verweilzeit des Rauchgases in vorbestimmt hohem Temperaturniveau zur Voraussetzung hat, kann durch Einschaltung eines Reaktionsraumes sichergestellt werden, daß die vorgenannten Bedingungen unter allen Umständen, das heißt auch bei zeitweilig ungünstigeren Verbrennungsverhältnissen, erfüllt sind, um die genannten gefährlichen Schadstoffe restlos abzubauen.

. Eine Anlage zum Verbrennen von Müll und insbesondere zur Durchführung des Verfahrens nach der Erfindung mit einem Drehrohrofen als Müllverbrennungsaggregat, dem eine Einrichtung zur Erzeugung von erwärmter Brennluft zugeordnet ist, ist dadurch gekennzeichnet, daß die Einrichtung Mittel zur Erwärmung der Brennluft auf Temperaturen zwischen 300 und 800 °C und fallweise zwischen 500 und 700 $^o$C aufweist.

Dabei ist vorzugsweise zwischen dem Drehrohrofen und der Einrichtung zur Erzeugung erwärmter Brennluft eine mit diesen in Verbindung stehende Reaktionskammer angeordnet.

Die Einrichtung ist zur indirekten Übertragung von Wärme des Rauchgases auf die Brennluft mittels eines Wärmeübertragungsfeststoffes ausgebildet, und weist zumindest zwei getrennte Wärmetauscher auf, wobei der erste Wärmetauscher als Erhitzer für den Wärmeübertragungsfeststoff zum direkten Wärmeaustausch mit Rauchgas, und der zweite Wärmetauscher als Erhitzer für die Brennluft zum direkten Wärmeaustausch mit dem heißen Wärmeübertragungsfeststoff ausgebildet ist, und der erste Wärmetauscher Mittel zum Hindurchleiten von heißem Rauchgas und Feststoff und der zweite Wärmetauscher Mittel zum Hindurchleiten von heißem Feststoff und zu erwärmender Luft aufweisen und Mittel zum Überleiten des in der ersten Stufe, der Aufheizstufe, erwärmten Wärmeübertraungsfeststoffes in die zweite Stufe, die Kühlstufe, vorgesehen sind.

Weitere Ausgestaltungen der Anlage sind entsprechend den Merkmalen der Ansprüche 26 bis 32 vorgesehen.

Im folgenden wird die Erfindung in der Zeichnung in einer bevorzugten Ausführungsform gezeigt, wobei den Zeichnungen weitere vorteilhafte Einzelheiten entnehmbar sind. Es zeigen:

Fig. 1    einen Verfahrensstammbaum der Anlage in Form
          eines Blockschaltbildes,

Fig. 2    ein Ausführungsbeispiel einer
          Müllverbrennungsanlage, wobei die einzelnen
          Elemente der Anlage bildhaft, jedoch rein
          schematisch dargestellt sind,

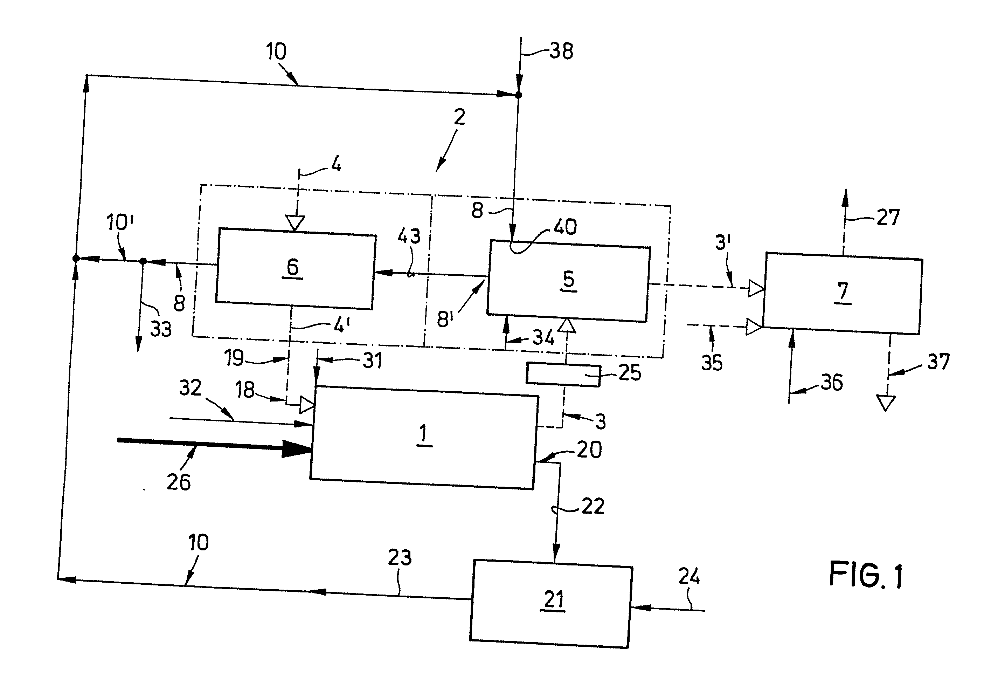

Wie aus dem Blockschaltbild Fig. 1 hervorgeht, ist die Anlage zum Verbrennen von Müll mit einem Drehrohrofen 1 als Müllverbrennungsaggregat ausgestattet. Diesem ist abgasseitig eine Einrichtung 2 zur Wärmeübertragung vom Rauchgas 3 auf die zur Feuerung erforderliche Brennluft 4, 4' zugeordnet. Diese Einrichtung 2 zur Wärmeübertragung weist zwei getrennte Wärmetauscher 5 und 6 auf. Hiervon ist der erste Wärmetauscher 5 als Feststofferhitzer zum direkten Wärmeaustausch zwischen Rauchgas 3 und Feststoff 8, und der zweite Wärmetauscher 6 als Brennlufterhitzer zum direkten Wärmeaustausch zwischen heißem Feststoff 8' und zu erwärmender Luft 4 ausgebildet. Jeder dieser Wärmetauscher 5, 6 weist Mittel zum Hindurchleiten von Rauchgas 3 und Feststoff 8 beziehungsweise heißem Feststoff 8' und Luft 4 auf. Weiterhin sind Mittel 43 zum Überleiten des im ersten Wärmetauscher 5 erwärmten Feststoffes 8' in den zweiten Wärmetauscher 6 vorgesehen.

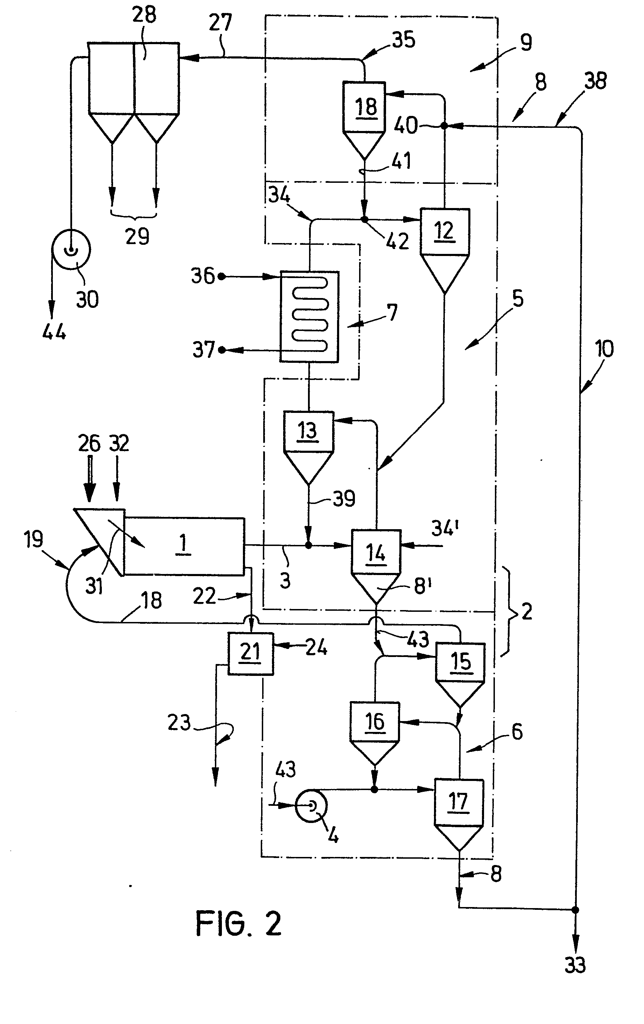

Die Wärmetauscher 5, 6 können in bekannter Weise zum direkten Wärmeaustausch zwischen körnigem oder feinkörnigem Feststoff 8 und Rauchgas 3 beziehungsweise Brennluft 4 als Schwebegaswärmetauscher mit Wärmetauscheraggregaten wie beispielsweise Wärmetauscherzyklonen 12 bis 18 (Fig. 2) ausgebildet sein.

Mit Vorteil können aber auch die Wärmetauscher 5, 6 als Wirbelschicht-Wärmetauscher oder mit einem gasdurchflutbaren Wanderrost oder als Schacht-Wärmetauscher ausgestattet sein.

Weil solche Ausbildungen von direkt wirkenden Wärmetauscher-Einrichtungen zum präsenten Fachwissen gehören, wurde aus Gründen der Übersichtlichkeit auf zeichnerische Darstellungen der verschiedenen Ausführungsmöglichkeiten im Zusammenhang mit der Erfindung verzichtet.

Wie der Verfahrensstammbaum in Fig. 1 zeigt, ist dem Wärmetauscher 5 eine Einrichtung 7 zur Abhitzeverwertung nachgeordnet. Diese kann einen Dampferzeuger aufweisen, ebenso auch andere wirtschaftliche Einrichtungen zur Abhitzeverwertung wie Abfalltrocknung, Energieerzeugung etc. Gemäß Ausführungsbeispiel in Fig. 2 ist der Einrichtung 7 zur Abhitzeverwertung ein Feststoffvorwärmer 9 und eine Einrichtung 28 zur Reinigung des Abgases 44 beispielsweise durch Entstaubung und Neutralisation nachgeschaltet.

Mit Vorteil wirkt sich bei der Rauchgas-Reinigungseinrichtung 28 - wie bereits erwähnt - kostensenkend aus, daß infolge geringen Luftüberschusses bei der Abfallverbrennung einerseits die zu reinigende Menge Rauchgas im Verhältnis zu bekannten Müllverbrennunganlagen erheblich niedriger ist, und daß durch den Kreislauf des Wärmeübertragungsfeststoffes andererseits im Rauchgas ursprünglich enthaltene Schadstoffe wie zum Beispiel Chlorid, Fluorid, Schwefeldioxid und Schwermetalle beziehungsweise deren Verbindungen an Wärmeübertragungsfeststoff chemisch oder adsortiv gebunden werden.

Der Drehrohrofen 1 besitzt einen Austrag 20 für flüssige Schlacke 22 und eine diesem nachgeordnete Einrichtung 21 zur Kühlung, welche vorzugsweise als Granulierungseinrichtung ausgebildet ist. Die Anlage weist ferner Fördermittel 10, 10' zum Transport beziehungsweise Kreislaufführung von Feststoffen beispielsweise Schlackengranulat 23 oder Kalkstein in den Feststofferhitzer 5 beziehungsweise den Feststoffvorwärmer 9 auf. In die Aufgabeseite des Drehrohrofens 1 wird dosiert Abfall aufgegeben. In den Ofenkopf mündet weiterhin eine Leitung 18 zum Einführen von heißer Brennluft 4' ein. Ein Zündbrenner 31 ist vorgesehen, um beim Anfahren der Anlage den Drehrohrofen 1 anzuwärmen und nach Anwärmung den aufgegebenen Abfall 26 zu zünden. Ferner weist der Drehrohrofen 1 eine Einrichtung 32 zur Aufgabe von Feststoffen auf. Es kann sich dabei auch um rezirkuliertes Feststoffgut mit Anteilen von Schlacke handeln. Ferner gelangt feinkörniger Feststoff in Form von Staub mit der vorgewärmten Brennluft durch die Leitung 18 in den Drehrohrofen 1. Mit dem Pfeil 33 ist eine Einrichtung angedeutet, durch welche verbrauchter Feststoff zur Deponie abgeführt wird. Gegebenenfalls

DYCKERHOFF
und 0183961
K H D
H 84/51

wird dieser Feststoff vor der Deponierung hydratisiert. Diese Maßnahmen, die an sich bekannt sind, werden hier nicht weiter beschrieben. Ihre Anwendung wird vom Fachmann nach Maßgabe der Stoffzusammensetzung von Fall zu Fall entschieden.

Der Feststofferhitzer 5 kann im Bedarfsfall Mittel 34 zur Brennstoffaufgabe aufweisen. Hierdurch ist die Möglichkeit gegeben, diesen unter reduzierenden Bedingungen zu betreiben. Dabei wird Kohlenstoff frei, welcher im Rauchgas 3 enthaltenes Stickoxid unter den vorherrschenden Temperaturbedingungen zu elementarem Stickstoff und Kohlenmonoxid abbaut. Unverbrauchtes Kohlenmonoxid wird vor oder beim Eintritt in die Einrichtung 7 zur Abhitzeverwertung unter Zugabe von Brennluft nachverbrannt. Hierfür ist eine vorzugsweise regelbare Aufgabe 35 für Brennluft vorgesehen. Im Falle einer Ausbildung der Einrichtung 7 als Dampferzeuger weist diese einen Wassereintritt 36 und einen Dampfaustritt 37 auf.
Der Feststofferhitzer 5, beziehungsweise der Feststoffvorwärmer 9 ist mit einer Aufgabe 38 für Feststoff ausgestattet. Als Feststoff kommen beispielsweise Mineralien mit Gehalten als Calciumoxid, Magnesiumoxid, Siliciumoxid, Eisenoxid oder ähnlichen infrage, welche beispielsweise auch als Grundstoffe zur Herstellung von hydraulischen Bindemitteln verwendet werden. Diese Stoffe sind deshalb geeignet, weil sie insbesondere im thermisch aktivierten Zustand hochaktive Adsorptionsmittel für im Rauchgas enthaltene Schadstoffe sind. Hierdurch sowie durch weitere Nachbehandlungsstufen zur Entstaubung wird von der Anlage gereinigtes und insbesondere entsticktes sowie entstaubtes Abgas 31 in die Atmosphäre abgegeben. In der Gasreinigungsanlage 28 anfallender Staub 29 kann gegebenenfalls in den Feststoffkreislauf rezirkuliert oder deponiert werden.

Die Funktion der Anlage ergibt sich im laufenden Betrieb wie folgt:

In die Feuerung des heißen Drehrohrofens 1 wird Abfall 26 in zeitlich vorbestimmter Menge kontinuierlich eingegeben und dabei durch Einleitung von heißer Brennluft 4' zunächst vorgetrocknet, aufgewirbelt, geschwelt und zum Zünden gebracht. Die dabei einsetzende Wärmewirkung des Verbrennungvorganges ist bei gesteuerter Brennluftzugabe so hoch, daß Rauchgastemperaturen oberhalb 1200 °C entstehen. Wegen des infolge der hohen Temperatur relativ großen spezifischen Wärmeinhaltes der Brennluft und der sich daraus ergebenden Vorteile für eine optimale Abfallverbrennung kann die Feuerung im Gegensatz zu bekannten Müllverbrennungsverfahren beziehungsweise Anlagen mit relativ geringem Luftüberschuß bespielsweise von 1,2 bis 1,3 gefahren werden.

Rauchgas 3 wird in den Feststofferhitzer 5 der Einrichtung zur Wärmeübertragung 2 eingeleitet und dort mit körnigem bis feinkörnigem Feststoff 8 innig und wiederholt in unmittelbaren Kontakt gebracht. Dabei vollzieht sich ein Wärmeaustausch in bekannter Weise, wobei das Rauchgas 3 einen Teil seines Wärmeinhalts an den Feststoff 8 überträgt. Nach der Trennung vom Rauchgas 3 wird der erhitzte Feststoff 8' in den Brennlufterhitzer 6 ein- und durch den Brennlufterhitzer 6 hindurchgeleitet und dabei mit Luft 4 gekühlt. Bei diesem Wärmeübertragungsprozeß, bei welchem eine innige und mehrfach direkte Durchmischung von Luft 4 und heißem Feststoff 8' stattfindet, wird die Luft auf die vorgesehene Brennlufttemperatur aufgeheizt und mit der Leitung 18 in den Drehrohrofen 1 eingeleitet.

Mit Brennluft von hoher Temperatur beispielsweise im Bereich zwischen 500 und 700 °C wird die Verbrennung vorteilhaft optimiert. Dabei wird in einer positiven Folge von Ursache und Wirkung im Drehrohrofen das Abfallgut getrocknet, durchwirbelt, sodann zum Schwelen gebracht und gezündet. Infolge der mit der Erfindung verbesserten Verbrennungsbedingungen stellen sich hohe Rauchgastemperaturen bei relativ geringem stöchiometrischem Luftüberschuß ein und führen zu einer Verringerung der Rauchgasmenge, wodurch die Kosten für die Rauchgasreinigung beziehungsweise Rauchgaswäsche fühlbar erniedrigt werden.

Der im Wärmetauscher 6 weitgehend gekühlte Feststoff 8 wird mit der Transporteinrichtung 10 beziehungsweise 10' größtenteils wieder zum Feststofferhitzer 5 beziehungsweise zum Feststoffvorwärmer 9 rezirkuliert, worauf der Wärmetauscher-Kreislauf in der beschriebenen Weise fortgesetzt wird. Ein Vorteil ergibt sich hierbei dadurch, daß die im Feststoff 8 nach dessen Abkühlung verbliebene Restwärme bei der Rezirkulierung in den

DYCKERHOFF
und **0183961**
K H D
H 84/51

Wärmetauscher 5 annähernd vollständig erhalten bleibt, wodurch der thermische Wirkungsgrad des Wärmeaustausch-Kreislaufs erhöht wird.

Infolge der hohen Temperaturen des Rauchgases 3 oberhalb 1200 °C werden organische und anorganische Verbindungen thermisch zerstört und in ihre Elemente zerlegt. Dadurch wird gewährleistet, daß entweder keine Dioxine entstehen oder bereits im Abfall vorhandene Dioxine bei dieser Temperatur zum Zerfall gebracht werden.

In Figur 2 ist die vorstehend beschriebene Anlage in bildhafter Form rein schematischer gezeigt, woraus insbesondere die Ausgestaltung der Wärmetauscher 5, 6 und 9 mit Wärmetauscherzyklonen 12 bis 18 ersichtlich ist. Dabei ist der Wärmetauscher 6 als Brennlufterhitzer nach Art eines Feststoffkühlers mit den Wärmetauscherzyklonen 15, 16 und 17 ausgestattet, während der Wärmetauscher 5 als Feststofferhitzer mit den Wärmetauscherzyklonen 13 und 14 und der Feststoffvorwärmer 9 mit den Zyklonen 12 und 18 ausgebildet ist. Die Funktion dieser Wärmetauscher wird als bekannt vorausgesetzt. Die gezeigte Anzahl von Zyklonstufen ist lediglich beispielhaft. Sie kann, wie dies an sich bekannt ist, in Anpassung an jeweils unterschiedliche Betriebsparameter einer Wärmetauscher-Einheit nach dem Ermessen des Fachmannes bestimmt werden.

Im gezeigten Ausführungsbeispiel gemäß Fig. 2 verläßt heißes Rauchgas im Temperaturbereich oberhalb 1200 °C den Drehrohrofen 1 und wird zunächst in den

DYCKERHOFF
und **0183961**
K H D
H 84/51

Wärmetauscherzyklon 14 des Wärmetauschers 5 eingeleitet. Aus dem darüberliegenden Wärmetauscherzyklon 13 führt eine Leitung 39 Feststoff in den Strom des Rauchgases 3. Gas und feinkörniger Feststoff ergeben eine Suspension, in welcher ein spontaner Wärmeaustausch zwischen Gas und Feststoff stattfindet. Dieser Feststoff, der beispielsweise Gesteinsmehl und Schlackengranulat enthält, wird mit einem Fördermittel 10 vom Wärmetauscher 6 zum Wärmetauscher 9 gefördert und an der Stelle 40 aufgegeben. Hier findet im Feststoffvorwärmer 9 ein erster Wärmeaustausch mit dem Strom des Rauchgases statt, wobei der Feststoff zunächst vorgewärmt wird. Vorgewärmter Feststoff wird sodann mit der Leitung 41 an der Stelle 42 in den Feststofferhitzer 5 eingeleitet und darin weiter erhitzt. Nach Abscheiden im Wärmetauscherzyklon 13 wird der weiter erwärmte Feststoff mit der Leitung 39 dem noch unabgekühlten Strom vom Rauchgases 3 aufgegeben und dabei auf Endtemperatur erhitzt. Nach Abscheidung im Wärmetauscherzyklon 14 gelangt der erhitzte Feststoff 8' mit der Leitung 43 in den Brennlufterhitzer 6. In diesem Erhitzer 6, der grundsätzlich gleichen Aufbau und gleiche Funktion wie die Wärmetauscher 5 und 9 aufweisen kann, findet ein Wärmeaustausch im umgekehrten Sinne statt, indem heißer Feststoff an die mit dem Ventilator 4 zugeführte kalte Luft 43 Wärme abgibt und dabei die Luft auf Brennlufttemperatur beispielsweise zwischen 300 und 800 °C beziehungsweise zwischen beispielsweise 500 und 700 °C erwärmt.

DYCKERHOFF
und **0183961**
K H D
H 84/51

Aus den in den Figuren 1 und 2 gezeigten Beispielen geht hervor, daß der Feststoff im Anlagensystem mehrfach im Kreislauf umgewälzt werden kann. Dabei werden beispielsweise Feststoffe wie Kalk oder Kalkstein, vorzugsweise in feinkörniger Form bei 38 und fallweise auch bei 32 in das Anlagensystem aufgegeben und gegebenenfalls mit granulierter Schlacke vermischt, die ebenfalls mit in den Kreislauf des Wärmetauscherfeststoffs aufgegeben werden kann. Die Stellen der Aufgabe bei 32 beziehungsweise 38 sind nur beispielhaft aufzufassen und können nach fachlichem Ermessen variiert werden.
In dem Maße, wie Feststoffe kontinuierlich in den Kreislauf des Systems aufgegeben werden, müssen verbrauchte Feststoffe daraus abgezogen werden, wofür beispielsweise wenigstens ein Austrag bei 33 vorgesehen ist.

Der Drehrohrofen 1 weist zur Aufgabe der Abfallstoffe eine vorzugsweise dosierende Vorrichtung auf. Weiterhin mündet in den Drehrohrofen 1 an dessen Aufgabeseite die Leitung 18 für heiße Brennluft 4'. Am Austragsende des Drehrohrofens 1 ist ein nicht gezeigtes Abschlußgehäuse angeordnet und mit einem Schlackenaustrag 20 ausgebildet. Flüssige Schlacke 22 wird beispielsweise in die Granuliereinrichtung 21 abgeworfen, darin im Wasserbad granuliert, danach mit einer nicht gezeigten Austragsvorrichtung herausgefördert und als Schlackengranulat 23 beispielsweise ganz oder teilweise der Transporteinrichtung 10' aufgegeben oder aus der Anlage abgeführt. Die Granuliereinrichtung 21 besitzt einen Wasserzulauf 24.

DYCKERHOFF
und KHD **0183961**
H 84/51

Das nach Entzug eines Teiles seines Wärmeinhalts im Wärmetauscher 5 temperaturerniedrigte Rauchgas 3' kann in eine Einrichtung 7 zur Abhitzeverwertung eingeleitet und darin beispielsweise zur Dampferzeugung genutzt werden. Aus der Einrichtung 7 austretendes Rauchgas gelangt in den Feststoffvorwärmer 9. Darin werden zugleich mit der Wärmeübertragung Schadstoffe des Rauchgases an den Wärmeübertragungsfeststoff chemisch und adsorptiv gebunden. Aus dem Feststoffvorwärmer 9 mit der Leitung 27 abgeführtes Abgas wird beispielsweise in einer Entstaubungseinrichtung 28, einem Elektro- oder Gewebefilter, entstaubt. Der Exhauster 30 zieht das Abgas 44 aus der Anlage ab und fördert es fallweise in einen nicht gezeigten Kamin.

Dem Rauchgas kann mit einer Brennstoffaufgabe 34 beziehungsweise 34' im Bereich des Wärmetauschers 5 Brennstoff zugefügt werden, durch dessen Vergasung eine reduzierende Atmosphäre entsteht. Dabei werden in der Feuerung entstandene Stickoxide zu elementarem Stickstoff reduziert, und Kohlenstoff unter Bildung von Kohlenmonoxid oxidiert. Durch Aufgabe zusätzlicher Brennluft 35 beispielsweise in die Abhitzeverwertungseinrichtung 7 (Fig. 1) beziehungsweise 9 (Fig. 2) kann überschüssiges Kohlenmonoxid sodann nachverbrannt werden.
Im Rauchgasfilter 28 anfallender Staub 29 kann entweder in den Feststoffkreislauf zurück oder, nach Maßgabe seines Schadstoffgehaltes, aus der Anlage abgeführt werden.

Wie aus der Darstellung und der Beschreibung der erfindungsgemäßen Anlage ersichtlich, ist diese kompakt, betrieblich unkompliziert beherrschbar und

DYCKERHOFF
und
K H Ø1 83961
H 84/51

besteht im wesentlichen aus bekannten und bewährten Einzelelementen. Infolge Optimierung der Verbrennungsverhältnisse arbeitet die Anlage äußerst wirtschaftlich sowie unter absoluter Vermeidung der Bildung von toxischen Stoffen, insbesondere Dioxinen, im Rauchgas. Bedingt durch die hohen Verbrennungstemperaturen wird die Asche geschmolzen, mineralisiert und bildet primär eine laugungsresistente Schlacke, die beispielsweise als Baustoff verwertet, zumindest aber schadlos deponiert werden kann. Schließlich kann sie auch zusammen mit anderen Feststoffen sowohl als Wärmeübertragungsmedium zum. Aufheizen der Brennluft wie auch als Filtermaterial zum Binden von Schadstoffen im Rauchgas verwendet werden.

Mithin vermeidet das erfindungsgemäße Verfahren und die entsprechende Anlage die beim Stand der Technik aufgezeigten Nachteile und erfüllt somit in optimaler Weise die eingangs gestellte Aufgabe.

DYCKERHOFF
und
K H **0183961**
H 84/51

Patentansprüche

1. Verfahren zum Verbrennen von Abfällen, wie Hausmüll und hausmüllähnlichen Abfällen und/oder Industrie- sowie Sondermüllabfällen, in einem Drehrohrofen unter Zufuhr von erwärmter Brennluft, dadurch gekennzeichnet, daß die Brennluft auf Temperaturen im Bereich zwischen 300 und 800 °C aufgeheizt wird.

2. Verfahren nach Anspruch 1, dadurch gekennzeichnet, daß die Brennluft vorzugsweise auf einen Temperaturbereich zwischen 500 und 700 °C aufgeheizt wird.

3. Verfahren nach Anspruch 1 und 2, dadurch gekennzeichnet, daß zur Aufheizung der Brennluft Wärme von dem bei der Abfallverbrennung entstehenden Rauchgas auf die Brennluft übertragen wird.

4. Verfahren nach Anspruch 1 bis 3, dadurch gekennzeichnet, daß die Brennluft auf eine so hohe Temperatur aufgeheizt wird, daß die Rauchgase der Abfallverbrennung Temperaturen von mindestens 1200 °C erreichen, wobei Verbrennungsrückstände vorzugsweise geschmolzen werden.

5. Verfahren nach einem der Ansprüche 1 bis 4, dadurch gekennzeichnet, daß die Brennluft in einem indirekten Wärmeaustauschprozeß mit wenigstens einem Teil der Rauchgase erhitzt wird.

6. Verfahren nach einem der Ansprüche 1 bis 5,
dadurch gekennzeichnet, daß der indirekte
Wärmeaustausch vom Rauchgas auf die Brennluft mit
Hilfe eines Wärmeübertragungsmediums vorgenommen,
und daß als Wärmeübertragungsmedium ein Feststoff
verwendet wird.

7. Verfahren nach einem der Ansprüche 1 bis 6,
dadurch gekennzeichnet, daß der
Wärmeübertragungsfeststoff in einer Aufheizstufe
im Kontakt mit dem Rauchgasstrom aufgeheizt,
danach in eine Kühlstufe überführt und darin im
Kontakt mit Luft gekühlt, und dabei die Luft zur
Brennlufttemperatur aufgeheizt wird.

8. Verfahren nach einem der Ansprüche 1 bis 7,
dadurch gekennzeichnet, daß Wärme des Rauchgases,
in Strömungsrichtung gesehen, zunächst teilweise
auf den Wärmeübertragungsfeststoff übertragen,
danach zur Erzeugung von Nutzenergie herangezogen
und schließlich nochmals zur Wärmeübertragung auf
den Wärmeübertragungsfeststoff für dessen
Vorwärmung verwendet wird.

9. Verfahren nach einem der Ansprüche 1 bis 8,
dadurch gekennzeichnet, daß nicht für Erwärmung
des Wärmeübertragungsfeststoffes genutzte
Wärmeenergie des Rauchgases anderweitig
wärmewirtschaftlich, zum Beispiel zur
Mülltrocknung beziehungsweise für Dampf-,
Fernwärme- und/oder Stromerzeugung etc. verwendet
wird.

DYCKERHOFF
und **0183961**
K H D
H 84/51

10. Verfahren nach einem der Ansprüche 1 bis 9, dadurch gekennzeichnet, daß als Wärmeübertragungsfeststoff mindestens zum Teil feinkörniger mineralischer Feststoff verwendet wird, dessen Komponenten, wie beispielsweise Kalk oder Kalkstein, Aktivitäten zur chemischen oder adsorptiven Bindung von bei der Müllverbrennung freigesetzten Schadstoffen besitzen.

11. Verfahren nach einem der Ansprüche 1 bis 10, dadurch gekennzeichnet, daß als Wärmeübertragungsfeststoff zumindest zu einem Teil beim Müllverbrennungsprozeß anfallende, vorzugsweise granulierte Schlacke verwendet wird.

12. Verfahren nach einem oder mehreren der Ansprüche 1 bis 11, dadurch gekennzeichnet, daß der Wärmeübertragungsfeststoff in feinkörniger Form, vorzugsweise in Form von Feststoffmehl, zur Wärmeübertragung verwendet wird.

13. Verfahren nach einem oder mehreren der Ansprüche 1 bis 12, dadurch gekennzeichnet, daß die Menge des Aufheiz- und Kühlstufen durchlaufenden Wärmeübertragungsfeststoffes wenigstens zum überwiegenden Teil mehrfach im Kreislauf durch das Wärmeübertragungssystem geführt wird.

14. Verfahren nach einem oder mehreren der Ansprüche 1 bis 13, dadurch gekennzeichnet, daß dem im Kreislauf befindlichen Feststoff nach Maßgabe

seiner Anreicherung mit Schadstoffen frischer Feststoff zugeführt und verbrauchter Feststoff abgeführt wird.

15. Verfahren nach Anspruch 14, <u>dadurch gekennzeichnet</u>, daß das Maß der Schadstoffanreicherung des Feststoffes an wenigstens einer Stelle des Kreislaufes ermittelt und als Regelgröße für die Feststoff-Abführmenge und/oder für die Zuführmenge verwendet wird.

16. Verfahren nach Anspruch 14 und 15, <u>dadurch gekennzeichnet</u>, daß der Mengenstrom des im Kreislauf geführten Feststoffs vorzugsweise im abgekühlten Zustand gravimetrisch oder volumetrisch erfaßt und ein entsprechender Wert als Regelgröße für die dem Kreislauf zugegebene Feststoffmenge verwendet wird.

17. Verfahren nach Anspruch 14 oder 15 oder 16, <u>dadurch</u> gekennzeichnet, daß Feststoff-Teilmengen nach Maßgabe ihrer jeweiligen Gehalte an unterschiedlichen Schadstoffen jeweils an unterschiedlichen Stellen des Feststoff-Kreislaufs beispielsweise an Stellen unterschiedlichen Temperaturniveaus beziehungsweise hoher spezifischer Anreicherungen abgezogen werden.

18. Verfahren nach einem oder mehreren der Ansprüche 1 bis 17, <u>dadurch gekennzeichnet</u>, daß Wärmeübertragungsfeststoff in der Aufheizstufe dem Rauchgasstrom und fallweise zum Teil auch dem Drehrohrofen aufgegeben wird.

DYCKERHOFF
und 0183961
K H D
H 84/51

19. Verfahren nach einem oder mehreren der Ansprüche 1 bis 18, dadurch gekennzeichnet, daß bei der Wärmeübertragung vom Rauchgas auf den Wärmeübertragungsfeststoff durch Zugabe von Brennstoff eine reduzierende Atmosphäre eingestellt wird, und daß nach vollzogenem Wärmeaustausch im Abgas enthaltener Brennstoff durch Zugabe von Brennluft nachverbrannt wird, wofür gegebenenfalls aufgeheizte Luft verwendet wird.

20. Verfahren nach einem oder mehreren der Ansprüche 1 bis 19, dadurch gekennzeichnet, daß die Müllverbrennung mit einem Brenngas durchgeführt wird, welches gegenüber Brennluft einen erhöhten Sauerstoffgehalt aufweist, beziehungsweise daß zusätzlich zur Brennluft Sauerstoffgas in die Feuerung des Drehrohrofens eingeleitet wird.

21. Verfahren nach einem oder mehreren der Ansprüche 1 bis 20, dadurch gekennzeichnet, daß das Rauchgas vor Abgabe von Wärme außerhalb des Drehrohrofens durch einen Reaktionsraum geführt und darin Temperatur und Verweilzeit des Rauchgases eingestellt wird.

22. Anlage zum Verbrennen von Abfällen, insbesondere zur Durchführung des Verfahrens nach den Ansprüchen 1 bis 21 mit einem Drehrohrofen als Verbrennungsaggregat, dem eine Einrichtung zur Erzeugung von erwärmter Brennluft zugeordnet ist, dadurch gekennzeichnet, daß die Einrichtung (2)
Mittel (5, 6, 9) zur Erwärmung von Brennluft auf
Temperaturen zwischen 300 und 800 $^{O}$C aufweist.

23. Anlage nach Anspruch 22, dadurch gekennzeichnet,
daß die Einrichtung (2) Mittel (5, 6, 9) zur
Erwärmung von Brennluft auf Temperaturen zwischen
500 und 700 $^{O}$C aufweist.

24. Anlage nach Anspruch 22 und 23, dadurch
gekennzeichnet, daß zwischen dem Drehrohrofen (1)
und der Einrichtung (2) zur Erzeugung erwärmter
Brennluft eine mit diesen in Verbindung stehende
Reaktionskammer (25) angeordnet ist.

25. Anlage nach einem der Ansprüche 22 bis 24, dadurch
gekennzeichnet, daß die Einrichtung (2) zur
indirekten Übertragung von Wärme des Rauchgases
der Müllverbrennung auf die Brennluft mittels
eines Wärmeübertragungsfeststoffes ausgebildet ist
und zumindest zwei Wärmetauscher (5, 6) aufweist,
wobei der erste Wärmetauscher (5) als Erhitzer für
den Wärmeübertragungsfeststoff zur direkten
Übertragung von Wärme vom Rauchgas an den
Feststoff und der zweite Wärmetauscher (6) als
Erhitzer für die Brennluft zur direkten
Übertragung von Wärme vom
Wärmeübertragungsfeststoff an Luft ausgebildet
ist, wobei der erste Wärmetauscher (5) Mittel zum
Hindurchleiten von heißem Rauchgas und zu
erwärmendem Feststoff und der zweite Wärmetauscher
(6) Mittel zum Hindurchleiten von heißem Feststoff

DYCKERHOFF
und **0183961**
K H D
H 84/51

und zu erwärmender Luft aufweist und Mittel (43) zum Überleiten des im ersten Wärmetauscher (5) erwärmten Wärmeübertragungsfeststoffes in den zweiten Wärmetauscher (6) vorgesehen sind.

26. Anlage nach einem der Ansprüche 22 bis 25, dadurch gekennzeichnet, daß dem Wärmetauscher (5) in Richtung der Gasströmung gesehen, wenigstens eine Einrichtung (7) zur Abhitzeverwertung des Rauchgases nachgeordnet ist.

27. Anlage nach einem oder mehreren der Ansprüche 22 bis 26, dadurch gekennzeichnet, daß der Einrichtung (7) zur Abhitzeverwertung in Richtung der Gasströmung ein Wärmetauscher (9) zur Feststoff-Vorwärmung nachgeordnet ist, der Mittel (10, 38) zur Zuführung und Aufgabe des zu erwärmenden Feststoffes und Mittel (41) zur Überleitung vorgewärmten Feststoffes in den als Feststofferhitzer angeordneten Wärmetauscher (5) aufweist.

28. Anlage nach einem der Ansprüche 22 bis 27, dadurch gekennzeichnet, daß zumindest ein Wärmetauscher (5, 6, 9) als Schwebegaswärmetauscher mit Wärmetauscher-Zyklonen (12 bis 18) ausgebildet ist.

29. Anlage nach einem der Ansprüche 22 bis 27, dadurch gekennzeichnet, daß zumindest ein Wärmetauscher (5, 6, 9) als Wirbelschicht-Wärmetauscher ausgebildet ist.

30. Anlage nach einem der Ansprüche 22 bis 27, dadurch gekennzeichnet, daß zumindest ein Wärmetauscher (5, 6, 9) mit einem von Rauchgas beziehungsweise von Brennluft durchfluteten, mit Wärmeübertragungsfeststoff beschichteten Rost, vorzugsweise mit einem Wanderrost, ausgebildet ist.

31. Anlage nach einem der Ansprüche 22 bis 30, dadurch gekennzeichnet, daß der Drehrohrofen (1) beziehungsweise die Brennluftzuführung (18) Mittel (19) zur Zuführung von Sauerstoffgas aufweisen.

32. Anlage nach einem der Ansprüche 22 bis 31, dadurch gekennzeichnet, daß der Drehrohrofen (1) einen Austrag (20) für Schlacke (22) und eine diesem nachgeordnete Einrichtung (21) zur Kühlung der Schlacke (22), vorzugsweise eine Schlackengranulierungseinrichtung, aufweist.

FIG.1

0183961

**FIG. 2**